(19)

**Europäisches Patentamt**
**European Patent Office**
**Office européen des brevets**

(11) **EP 1 256 857 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***G05B 17/02*** *(2006.01)*

(21) Anmeldenummer: **01111465.9**

(22) Anmeldetag: **10.05.2001**

(54) **Verfahren zur Erstellung eines Datenvalidierungsmodells einer Anlage aus einem Simulationsmodell dieser Anlage**

Method for generating a data-validation model of an installation from a simulation model of the installation

Procédé pour la génération d'un modèle de validation de données d'une installation à partir d'un modèle de simulation de cette installation

(84) Benannte Vertragsstaaten:
**AT BE CH CY DE DK ES FI FR GB GR IE IT LI LU MC NL PT SE TR**

(43) Veröffentlichungstag der Anmeldung:
**13.11.2002 Patentblatt 2002/46**

(73) Patentinhaber: **SIEMENS AKTIENGESELLSCHAFT**
**80333 München (DE)**

(72) Erfinder:
- **Altpeter, Reinhold**
  **91056 Erlangen (DE)**
- **Löbel, Gustav, Dr.**
  **91083 Baiersdorf (DE)**

(56) Entgegenhaltungen:
**EP-A- 1 058 169       US-A- 5 682 309**

## Beschreibung

Die vorliegende Erfindung betrifft ein Verfahren zur Erstellung eines Datenvalidierungsmodells einer Anlage aus einem Simulationsmodell dieser Anlage, wobei sowohl das Datenvalidierungsmodell als auch das Simulationsmodell Gleichungen beinhalten, die Zusammenhänge zwischen Freiheitsgraden des Simulationsmodells und im Betrieb der Anlage gemessenen Meßwerten des Datenvalidierungsmodells sowie Randbedingungen beschreiben und die Anzahl der Freiheitsgrade des Simulationsmodells größer ist als die Anzahl der Meßwerte des Datenvalidierungsmodells und die Meßwerte als Freiheitsgrade in dem Simulationsmodell enthalten sind.

Bei der Planung einer Anlage, beispielsweise eines Kraftwerks, wird für die grundlegende Auslegung ein Simulationsmodell erstellt. Dieses Simulationsmodell enthält Gleichungen, die beispielsweise Bilanzen der Massenströme und der Energie basierend auf Massen- und Energieerhaltung darstellen.

In einer ersten Stufe dieses Modells werden noch keine konstruktiven Randbedingungen wie beispielsweise Flächen von Wärmeaustauschern, Durchmesser oder Längen eingeführt. Es werden statt dessen die gewünschten Änderungen der jeweiligen Freiheitsgrade vorgegeben, beispielsweise eine Temperaturänderung in einem Wärmetauscher oder ein Druckabfall. Diese Änderungen werden für kleine Baugruppen der Anlage vorgesehen, so daß sich ein feines Raster mit einer großen Anzahl von Stützstellen ergibt. An jeder dieser Stützstellen werden relevante Größen wie Druck, Temperatur, Enthalpie oder Massenstrom in der Simulation berechnet. Diese Größen fließen für jede Stützstelle als Freiheitsgrade in das Simulationsmodell ein. Es ergibt sich daher eine große Anzahl von Freiheitsgraden. In weiteren Stufen werden die gewünschten Änderungen durch Geometrien ersetzt, die in einem Auslegungspunkt den Änderungen entsprechen.

Die Anlage wird nach ihrer Fertigstellung diagnostiziert und abgenommen. Zu diesem Zweck werden einige der Freiheitsgrade des Simulationsmodells gemessen. Die Anzahl der Meßstellen wird aus Kostengründen möglichst gering gehalten. Es soll auch nur ein integrales Gesamtverhalten der Anlage oder vergleichsweise großer Baugruppen abgebildet werden. Darüber hinaus werden nicht alle tatsächlich meßbaren Größen gemessen. Das Raster der Meßstellen ist gröber als das Raster des Simulationsmodells und berücksichtigt weniger Freiheitsgrade. Daher ist die Anzahl der gemessenen Freiheitsgrade kleiner als die Anzahl der Freiheitsgrade des Simulationsmodells.

Die gemessenen Freiheitsgrade werden als Meßwerte bezeichnet. Unter einem "Meßwert" wird in diesem Zusammenhang nicht nur das direkte Meßergebnis eines Sensors wie Temperatur oder Druck verstanden, sondern auch eine mit Meßergebnissen zusammenhängende Größe wie die Enthalpie.

Diese Meßwerte müssen bestimmte physikalische Gleichungen, wie beispielsweise wiederum Massen- und Energieerhaltung, erfüllen. Aufgrund von Meßfehlern werden diese Gleichungen von den Meßwerten jedoch im Regelfall nicht erfüllt. Im Rahmen einer Datenvalidierung werden daher Korrekturen zu den Meßwerten berechnet. Die Korrekturen erfolgen derart, daß die physikalischen Gleichungen exakt erfüllt werden. Die Datenvalidierung wird anhand eines Datenvalidierungsmodells vorgenommen, das die physikalischen Gleichungen abbildet. Die Problematik von Meßfehlern und der Datenvalidierung ist in der VDI-Richtlinie 2048, Blatt 1 "Meßunsicherheiten bei Abnahmemessungen an energie- und kraftwerkstechnischen Anlagen - Grundlagen" dargestellt.

Selbstverständlich sollen die Korrekturen möglichst klein sein. Falls sie größer werden als die Meßtoleranz beziehungsweise die errechneten Meßfehler, ist dies ein Hinweis darauf, daß die Ausgangsbedingungen zur Errechnung der Meßfehler falsch gewählt oder das Datenvalidierungsmodell nicht korrekt ist. Letzeres kann daran liegen, daß der Zustand der Anlage von dem Datenvalidierungsmodell abweicht, beispielsweise aufgrund von Leckagen.

Das Datenvalidierungsmodell muß hochgenau sein und möglichst viele Gleichungen berücksichtigen. Je höher die Zahl der Gleichungen ist, um so größer ist die Zahl der Bedingungen, die die Meßwerte und die Korrekturen erfüllen müssen. Die Erhöhung der Qualität der Meßwerte ist dann am besten, wenn alle für die Meßwerte einschlägigen Gleichungen gefunden und in das Datenvalidierungsmodell einbezogen werden.

Bisher wurde für jeden Einzelfall ein eigenes Datenvalidierungsmodell erstellt. Dieses Modell baut ein Fachmann aus seiner Kenntnis der Anlage und den Meßwerten auf. Der Aufbau des Modells ist aufwendig und fehlerbehaftet.

Zum Beispiel offenbart die Druckschrift EP 1 058 169 A ein Verfahren zur Bestimmung einer Menge von Sensoren und einer Menge von Randbedingungen zur Verwendung in einer Datenvalidierung, bei der anhand von Messwerten der Menge von Sensoren sowie anhand von der Menge von Randbedingungen eine Schätzung eines aus Zustandselementen bestehenden Zustandes eines Systems bestimmt wird.

Aufgabe der vorliegenden Erfindung ist es daher, ein Verfahren bereitzustellen, das den Aufbau des Datenvalidierungsmodells wesentlich vereinfacht und beschleunigt.

Erfindungsgemäß wird diese Aufgabe bei einem Verfahren der eingangs genannten Art dadurch gelöst, daß die Gleichungen des Simulationsmodells derart umgeformt werden, daß sich mindestens eine Gleichung ergibt, in der als Freiheitsgrade nur noch die Meßwerte des Datenvalidierungsmodells enthalten sind, und daß diese mindestens eine Gleichung als Datenvalidierungsmodell verwendet wird.

Mit dem erfindungsgemäßen Verfahren wird sichergestellt, daß sämtliche Gleichungen, die in dem Simulationsmodell der Anlage enthalten sind, beim Aufbau des Datenvalidierungsmodells berücksichtigt werden. Das Simulationsmodell enthält mehr Freiheitsgrade und Gleichungen als das Datenvalidierungsmodell. Es steht die maximale Anzahl von Gleichungen für das Datenvalidierungsmodell zur Verfügung. Das erfindungsgemäße Verfahren stellt daher sicher, daß sämtliche für die Meßwerte einschlägigen Gleichungen in das Datenvalidierungsmodell einfließen. Die Zahl der Gleichungen des Datenvalidierungsmodells wird maximiert und somit dessen Genauigkeit verbessert. Da das Datenvalidierungsmodell aus dem Simulationsmodell abgeleitet wird, werden der Arbeitsaufwand reduziert und die Fehleranfälligkeit wesentlich verringert.

Vorteilhafte Ausgestaltungen und Weiterbildungen der Erfindung gehen aus den abhängigen Ansprüchen hervor.

Dem Simulationsmodell wird vorteilhaft mitgeteilt, welche seiner Freiheitsgrade Meßwerte sind. Mit anderen Worten wird dem Simulationsmodell Information eingegeben, die eine Differenzierung zwischen Meßwerten und den verbleibenden Freiheitsgraden ermöglicht.

Vorteilhaft weist das Simulationsmodell der Anlage eine Matrix charakteristischer Parameter auf, die zur Ableitung einer Matrix charakteristischer Parameter des Datenvalidierungsmodells umgeformt wird. Dies ist die Folge einer Linearisierung der Gleichungen beider Modelle zur Lösung der nicht-linearen Gleichungen des Simulations- und Datenvalidierungsmodells. Geeignete Verfahren zur Linearisierung und Iteration sind beispielsweise dargestellt in G. Grosche, V. Ziegler, D. Ziegler (Herausgeber), "Taschenbuch der Mathematik", 23. Auflage, Verlag Harri Deutsch, Thun und Frankfurt/Main, Kapitel 7.1.2.4 "Numerische Verfahren" [1].

Die Freiheitsgrade und Randbedingungen der Gleichungen werden dann als Vektoren und die Parameter der Gleichungen als Matrix geschrieben. Jede Zeile der Matrix zusammen mit der dieser Zeile zugeordneten Randbedingung entspricht dann einer Gleichung, und jedem Freiheitsgrad ist genau eine Spalte zugeordnet.

Zur Umformung werden in einem ersten Schritt Spalten der Matrix des Simulationsmodells so angeordnet, daß alle den Meßwerten zugeordneten Spalten an der rechten Seite der Matrix in einem zweiten Bereich und alle weiteren Spalten an der linken Seite der Matrix in einem ersten Bereich angeordnet sind. Dieser Schritt geschieht vorteilhaft durch Multiplikation der Matrix des Simulationsmodells mit einer Transformationsmatrix, die die erforderlichen Spaltenvertauschungen durchführt.

In einem zweiten Schritt werden die Spalten des ersten Bereichs in eine maximal mögliche Diagonalform gebracht. Diese Form wird beispielsweise durch eine Gauss-Elimination erzeugt, die in [1], Kapitel 7.1.2.1 beschrieben ist. Ziel ist, möglichst viele Zeilen zu erhalten, die im ersten Bereich nur noch Parameter mit dem Wert Null aufweisen. Diese Zeilen stellen Gleichungen dar, die nur noch die Meßwerte, nicht aber die anderen Freiheitsgrade des Simulationsmodells enthalten. Im zweiten Bereich können einige Parameter ebenfalls den Wert Null annehmen.

In einem dritten Schritt werden Zeilen der Matrix ermittelt werden, die im ersten Bereich nur Parameter mit dem Wert Null aufweisen, und die diesen Zeilen entsprechenden Gleichungen werden als Datenvalidierungsmodell verwendet. Vorteilhaft werden nur die Parameter des zweiten Bereichs der ermittelten Zeilen und die zugehörigen Randbedingungen sowie die Meßwerte als Datenvalidierungsmodell verwendet. Die dem ersten Bereich zugeordneten Freiheitsgrade entfallen, da die Parameter der in Frage stehenden Zeilen den Wert Null haben. Ein Mitführen dieser Freiheitsgrade und Parameter ist daher nicht erforderlich.

Das Vorgehen wird zur Verdeutlichung anhand eines Beispiels erläutert.

Nach der Linearisierung läßt sich das Simulationsmodell S als lineares Gleichungssystem wie folgt darstellen:

$$A \circ x = b, \text{ wobei}$$

wobei

$A$: charakteristische Matrix des Simulationsmodells, beispielsweise Jacobi-Matrix der Ableitungen gemäß der Methode von Newton-Kantorowitsch, vgl. [1],

$x$: Vektor der Freiheitsgrade des Simulationsmodells, und

$b$: Vektor der Randbedingungen.

Ausgeschrieben ergibt sich folgende Darstellung:

$$\begin{bmatrix} a_{1,1} & a_{1,2} & \cdots & a_{1,n} \\ a_{2,1} & a_{2,2} & & a_{2,n} \\ \vdots & & \ddots & \vdots \\ a_{m,1} & & \cdots & a_{m,n} \end{bmatrix} \begin{bmatrix} x_1 \\ x_2 \\ \vdots \\ x_n \end{bmatrix} = \begin{bmatrix} b_1 \\ b_2 \\ \vdots \\ b_n \end{bmatrix}$$

Die Zahl n der Spalten ist typischerweise größer als die Zahl m der Zeilen. Die Matrix $A$ ist damit breiter als hoch. Für das erfindungsgemäße Verfahren ist der genaue Wert der Parameter $a_{i,j}$ der Matrix $A$ nicht von Belang. Erfindungsgemäß werden diese Parameter zwar berechnet, aber nur diejenigen berücksichtigt, die von Null verschieden sind. Zur Vereinfachung wird daher in der folgenden Darstellung nur angegeben, welche Parameter von Null verschieden sind.

Es ergibt sich beispielhaft folgendes Bild für die

Matrix $A$ :

```
. . . * . * . . . . .
* * * . * . * . . . *
. . . . . * . . * . .
* . * . . . * * . * *
```

Diese Matrix stellt ein Simulationsmodell mit vier Gleichungen entsprechend den vier Zeilen und elf Freiheitsgraden entsprechend elf Spalten dar. Das Symbol "*" bezeichnet einen von Null verschiedenen Wert, das Symbol "." einen Wert von Null.

Für die Datenvalidierung und das Datenvalidierungsmodell werden im Betrieb der Anlage nur einige der Freiheitsgrade gemessen. Jedem dieser Meßwerte ist eine Spalte der Matrix $A$ des Simulationsmodells zugeordnet. In einem ersten Schritt werden die den Meßwerten zugeordneten Spalten der Matrix $A$ nach rechts verschoben. Die Vektoren $x$, $b$ der Freiheitsgrade und der Randbedingungen werden entsprechend umgestellt.

In diesem Beispiel werden sechs Freiheitsgrade gemessen, nämlich die den Spalten 2, 3, 5, 8, 10 und 11 zugeordneten Freiheitsgrade. Es ergibt sich daher nach der Umstellung folgendes Bild der Matrix $A$ :

```
. * * . .   | . . . . . .
* . . * .   | * * * . . *
. . * . *   | . . . . . .
* . . * .   | . * . * * *
```

Die gemessenen Freiheitsgrade beziehungsweise die Meßwerte sind den letzten sechs Spalten zugeordnet. Dies ist schematisch durch den senkrechten Strich und das Absetzen angedeutet. Die Matrix $A$ wird in zwei Bereiche unterteilt, von denen der erste, linke den nicht gemessenen Freiheitsgraden und der zweite, rechte den Meßwerten zugeordnet ist.

Diese Matrix $A$ wird nun einer Gauß-Elimination unterworfen. Ziel ist, möglichst viele Nullstellen in dem linken Bereich der nicht gemessenen Freiheitsgrade zu erzeugen. Es können hierbei auch Zeilenvertauschungen in der gesamten Matrix sowie Spaltenvertauschungen vorgenommen werden. Bei Spaltenvertauschungen müssen die den Meßwerten zugeordneten Spalten allerdings stets im rechten Bereich verbleiben, können also nur untereinander vertauscht werden. In der Praxis hat es sich daher bewährt, Spaltenvertauschungen nur im ersten Bereich vorzunehmen.

Im Rahmen dieser Gauß-Elimination werden einige der vorher von Null verschiedenen Parameter zu Null. Die neue Form der Matrix $A$ ist wie folgt:

```
. * . . * .   | * * * . . *
. * . . *     | . . . . . .
. . * . *     | . . . . . .
. . . . . .   | * * * * * *
```

Die letzte Zeile enthält von Null verschiedene Werte nur noch in den Spalten, die den Meßwerten zugeordnet sind. Die dieser Zeile entsprechende Gleichung ist daher unabhängig von den weiteren, nicht gemessenen Freiheitsgraden. Sie stellt einen eindeutigen Zusammenhang zwischen den Meßwerten her.

Der Vektor $b$ der Randbedingungen wird entsprechend den vorgenommenen Operationen angepaßt. Eine Anpassung des Vektors $x$ der Freiheitsgrade ist nur dann erforderlich, wenn Spaltenvertauschungen im rechten Bereich der den Meßwerten zugeordneten Spalten vorgenommen worden sind. Die den anderen Spalten zugeordneten Freiheitsgrade werden bei der Erstellung des Datenvalidierungsmodells nicht berücksichtigt und brauchen daher nicht an Spaltenvertauschungen in dem linken Bereich angepaßt zu werden.

Zur Vereinfachung und Verringerung des Daten- und Rechenaufwands werden im vorliegenden Beispiel nur die Parameter der letzten Zeile und der letzten sechs Spalten der Matrix $A$, die sechs Meßwerte und die der letzten Zeile zugeordnete Randbedingung aus dem Simulationsmodell herausgegriffen. Da die anderen Parameter dieser Zeile auf Null gebracht worden sind und somit bei der Berechnung entfallen, tritt kein Informationsverlust auf. Falls in mehreren Zeilen die Parameter des ersten, linken Bereichs auf Null gebracht werden, werden sämtliche dieser Zeilen übernommen.

Die Matrix $C$ des Datenvalidierungsmodells D hat dann folgende Form:

$$* \; * \; * \; * \; * \; *$$

Das Datenvalidierungsmodell D ergibt sich zu:

$$C \circ y = q \, ,$$

wobei

$C$ : charakteristische Matrix des Datenvalidierungsmodells,

$y$ : Vektor der Meßwerte des Datenvalidierungsmodells, und

$q$: angepaßter Vektor der Randbedingungen $b$.

Diese Gleichung stellt somit einen eindeutigen Zusammenhang zwischen den Meßwerten und den zugehörigen Randbedingungen her. Die weiteren im Simulationsmodell berücksichtigten Freiheitsgrade und Randbedingungen fließen nicht mehr ein. Die Gleichung kann ohne weitere Änderung als Datenvalidierungsmodell verwendet werden.

Nachstehend wird die Erfindung an Hand eines Ausführungsbeispiels näher erläutert, das in schematischer Weise in der Zeichnung dargestellt ist. Dabei zeigt:

Figur 1    eine schematische Darstellung einer Anlage

Figur 2    eine Darstellung des Simulationsmodells in Form eines linearen Gleichungssystems;

Figur 3    die charakteristische Matrix des Simulationsmodells in schematischer Darstellung;

Figur 4    die charakteristische Matrix des Simulationsmodells in schematischer Darstellung nach dem Vertauschen der Spalten;

Figur 5    die charakteristische Matrix des Simulationsmodells in schematischer Darstellung nach dem Vertauschen der Spalten und nach der Diagonalisierung;

Figur 6    die charakteristische Matrix des Datenvalidierungsmodells; und

Figur 7    eine Darstellung des Datenvalidierungsmodells in Form eines linearen Gleichungssystems.

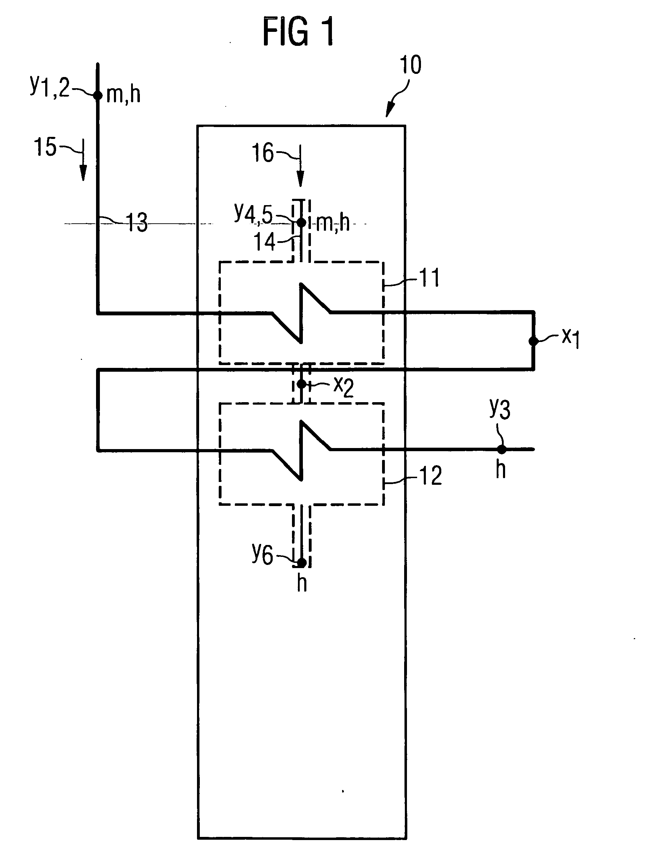

Figur 1 zeigt eine Anlage 10 mit zwei Wärmetauschern 11, 12 und zwei Leitungen 13, 14. Die Leitung 13 wird in Pfeilrichtung 15 von einem zu erwärmenden Medium durchströmt. Die Wärmezufuhr zu den Wärmetauscher 11, 12 erfolgt durch die Leitung 14, die in Pfeilrichtung 16 von einem heißen Medium durchströmt wird.

Ein Simulationsmodell dieser Anlage 10 umfaßt neben verschiedenen vorgegebenen Änderungen wie der Temperaturänderung an den Wärmetauschern 11, 12 und dem Druckabfall in den Leitungen 13, 14 noch einige Freiheitsgrade. Es werden die Massenströme $m$ durch die Leitungen 13, 14 sowie die Enthalpie $h$ stromaufwärts des ersten Wärmetauschers 11 und stromabwärts des zweiten Wärmetauscher 12 berücksichtigt. Die Massenströme $m$ werden als konstant angesetzt. Das Simulationsmodell berücksichtigt weiter die Enthalpie der Medien zwischen den Wärmetauschern. Diese Enthalpien sind schematisch als $x_1$, $x_2$ angegeben.

In der Praxis wird das Verhalten der Medien zwischen den Wärmetauschern 11, 12 nicht gemessen. Es erfolgt daher eine Messung nur stromaufwärts des ersten Wärmetauschers 11 und stromabwärts des zweiten Wärmetauscher 12. Es werden sechs Meßwerte, zwei Massenströme und vier Enthalpien, ermittelt, die schematisch als $y_1$, ..., $y_6$ gekennzeichnet sind. Die Enthalpie $h$ wird hierbei nicht direkt gemessen, sondern aus Meßergebnissen errechnet.

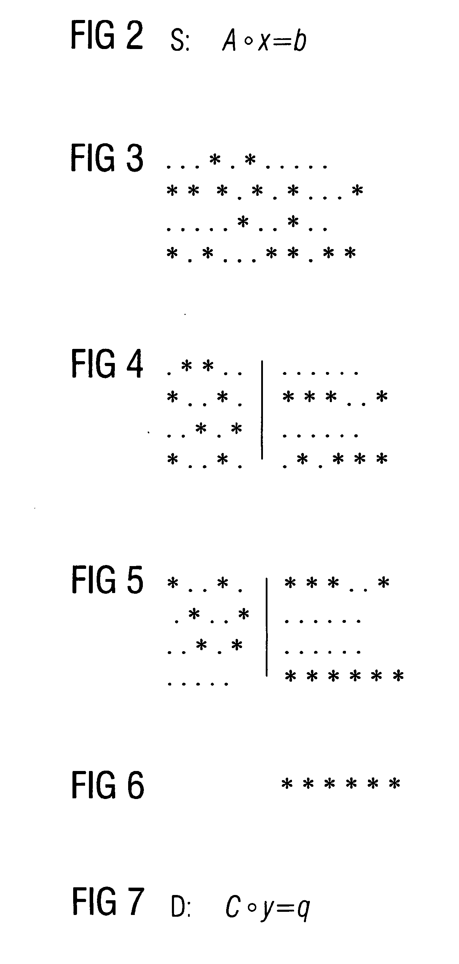

Das Simulationsmodell S der Anlage 10 mit seiner charakteristischen Matrix $A$, einem Vektor der Freiheitsgrade $x$ und einem Vektor der Randbedingungen $b$ ist schematisch in Figur 2 dargestellt. Der Vektor $x$ der Freiheitsgrade umfaßt sowohl die Meßwerte $y_1$, ..., $y_6$ als auch die Enthalpien $x_1$, $x_2$ zwischen den Wärmetauschern 11, 12 sowie weitere Freiheitsgrade.

Das erfindungsgemäße Verfahren ist anhand der Änderungen der Matrix $A$ in den Figuren 3 bis 7 näher dargestellt. Zunächst wird die Matrix $A$ aufgestellt (Figur 3) und dann umsortiert. Die den Meßwerten $y_1$, ..., $y_6$ zugeordneten Spalten werden rechts in einem zweiten Bereich angeordnet. In einem ersten, linken Bereich verbleiben die den anderen Freiheitsgraden des Simulationsmodells zugeordneten Spalten. Die beiden Bereiche sind schematisch durch einen Strich getrennt (Figur 4). Der linke Bereich wird in eine maximal mögliche Diagonalform gebracht (Figur 5). In der letzten Zeile sind alle Parameter des ersten Bereichs zu Null geworden. Die Parameter dieser Zeile im zweiten Bereich stellen daher einen Zusammenhang zwischen den Meßwerten dar, der unabhängig von den weiteren Freiheitsgraden des Simulationsmodells ist. Diese Parameter werden als Matrix $C$ eines Datenvalidierungsmodells D verwendet (Figur 6). Das Datenvalidierungsmodell D wird vervollständigt durch den Vektor $y$ der Meßwerte $y_1$, ..., $y_6$ und den Entsprechend der Diagonalisierung angepaßten Vektor $q$ der Randbedingungen $b$ (Figur 7).

Das erfindungsgemäße Verfahren ermöglicht eine automatische Ermittlung des Datenvalidierungsmodells D aus dem Simulationsmodell S der Anlage 10. Es wird die maximal mögliche Zahl von Gleichung verwendet, so daß die größtmögliche Genauigkeit erreicht wird. Aufgrund der Übernahme der Informationen aus dem Simulationsmodell S wird der Arbeitsaufwand wesentlich verringert. Eingabefehler bei der Erstellung des Datenvalidierungsmodells D werden vollständig ausgeschlossen.

Das Datenvalidierungsmodell D kann jederzeit an Änderungen des Simulationsmodells S angepaßt werden. Damit können Meßwerte sofort mit dem aktuellen Zustand der Anlage 10 verglichen werden. Fehler oder Leckagen der Anlage 10 werden unverzüglich erkannt.

**Patentansprüche**

1.    Verfahren zur Erstellung eines Datenvalidierungsmodells (D) einer Anlage (10) aus einem Simulationsmodell (S) dieser Anlage (10), wobei sowohl das Datenvalidierungsmodell (D) als auch das Simulationsmodell (S) Gleichungen beinhalten, die Zusammenhänge zwischen Freiheitsgraden (x) des Simulationsmodells (S) und im Betrieb der Anlage (10) gemessenen Meßwerten (y) des Datenvalidierungsmodells (D) sowie Randbedingungen (b; q) beschreiben und die Anzahl der Freiheitsgrade (x) des Simulationsmodells (S) größer ist als die Anzahl der Meßwerte (y) des Datenvalidierungsmodells (D) und die Meßwerte (y) als Freiheitsgrade (x) in dem Simulationsmodell (S) enthalten sind, **dadurch gekennzeichnet, daß** die Gleichungen des Simulationsmodells (S) derart umgeformt werden, daß sich mindestens eine Gleichung ergibt, in der als Freiheitsgrade nur noch die Meßwerte (y) enthalten sind, und daß diese mindestens eine Gleichung als Datenvalidierungsmodell (D) verwendet wird.

2. Verfahren nach Anspruch 1, **dadurch gekennzeichnet, daß** dem Simulationsmodell (S) eingegeben wird, welche seiner Freiheitsgrade (x) Meßwerte (y) sind.

3. Verfahren nach Anspruch 2, **dadurch gekennzeichnet, daß** das Simulationsmodell (S) der Anlage (10) eine Matrix (A) charakteristischer Parameter $(a_{i,j})$ aufweist, die zur Ableitung einer Matrix (C) charakteristischer Parameter des Datenvalidierungsmodells (D) umgeformt wird.

4. Verfahren nach Anspruch 3, **dadurch gekennzeichnet, daß** zur Umformung in einem ersten Schritt Spalten der Matrix (A) des Simulationsmodells (S) so angeordnet werden, daß alle den Meßwerten (y) zugeordneten Spalten an der rechten Seite der Matrix (A) in einem zweiten Bereich und alle weiteren Spalten an der linken Seite der Matrix (A) in einem ersten Bereich angeordnet sind.

5. Verfahren nach Anspruch 4, **dadurch gekennzeichnet, daß** zur Umformung in einem zweiten Schritt die Spalten des ersten Bereichs in eine maximal mögliche Diagonalform gebracht werden.

6. Verfahren nach Anspruch 5, **dadurch gekennzeichnet, daß** zur Umformung in einem dritten Schritt Zeilen der Matrix (A) ermittelt werden, die im ersten Bereich nur Parameter mit dem Wert Null aufweisen und die diesen Zeilen entsprechenden Gleichungen als Datenvalidierungsmodell (D) verwendet werden.

7. Verfahren nach Anspruch 6, **dadurch gekennzeichnet, daß** nur die Parameter des zweiten Bereichs der ermittelten Zeilen und die zugehörigen Randbedingungen (q) sowie die Meßwerte (y) als Datenvalidierungsmodell (D) verwendet werden.

**Claims**

1. Method for generating a data validation model (D) of a plant (10) from a simulation model (S) of said plant (10), both the data validation model (D) and the simulation model (S) containing equations which describe relationships between degrees of freedom (x) of the simulation model (S) and measured values (y), measured during operation of the plant (10), of the data validation model (D) as well as boundary conditions (b; q), and the number of the degrees of freedom (x) of the simulation model (S) being greater than the number of the measured values (y) of the data validation model (D), and the measured values (y) being included as degrees of freedom (x) in the simulation model (S), **characterized in that** the equations of the simulation model (S) are transformed in such a way that at least one equation is yielded in which only the measured values (y) are still included as degrees of freedom, and **in that** said at least one equation is used as data validation model (D).

2. Method according to Claim 1, **characterized in that** information as to which of its degrees of freedom (x) are measured values (y) is input into the simulation model (S).

3. Method according to Claim 2, **characterized in that** the simulation model (S) of the plant (10) has a matrix (A) of characteristic parameters $(a_{i,j})$, which is transformed in order to derive a matrix (C) of characteristic parameters of the data validation model (D).

4. Method according to Claim 3, **characterized in that** for the purpose of transformation columns of the matrix (A) of the simulation model (S) are arranged in a first step such that all columns assigned to the measured values (y) are arranged on the right-hand side of the matrix (A) in a second area and all further columns are arranged on the left-hand side of the matrix (A) in a first area.

5. Method according to Claim 4, **characterized in that** for the purpose of transformation in a second step the columns of the first area are brought to a maximum possible extent into diagonal form.

6. Method according to Claim 5, **characterized in that** for the purpose of transformation in a third step rows of the matrix (A) are determined which only have parameters of the value zero in the first area, and the equations corresponding to these rows are used as data validation model (D).

7. Method according to Claim 6, **characterized in that** only the parameters of the second area of the determined rows, and the associated boundary conditions (q) as well as the measured values (y) are used as data validation model (D).

**Revendications**

1. Procédé de création d'un modèle de validation de données (D) d'une installation (10) à partir d'un modèle de simulation (S) de cette installation (10), le modèle de validation de données (D) et le modèle de simulation (S) contenant des équations qui décrivent des relations entre des degrés de liberté (x) du modèle de simulation (S) et des valeurs mesurées (y) lors de l'exploitation de l'installation (10) pour le modèle de validation de données (D) ainsi que des conditions aux limites (b ; q) et le nombre des degrés de liberté (x) du modèle de simulation (S) étant plus grand que le nombre des valeurs mesurées (y) du modèle de validation de données (D) et les valeurs mesurées (y) étant contenues comme degrés de liberté (x) dans le modèle de simulation (S), **caractérisé par le fait que** les équations du modèle de simulation (S) sont transformées de telle sorte qu'il en résulte au moins une équation qui ne contient plus comme degrés de liberté que les valeurs mesurées (y) et **par le fait que** cette ou ces équations sont utilisées comme modèle de validation de données (D).

2. Procédé selon la revendication 1, **caractérisé par le fait qu'**il est indiqué au modèle de simulation (S) lesquels de ses degrés de liberté (x) sont des valeurs mesurées (y).

3. Procédé selon la revendication 2, **caractérisé par le fait que** le modèle de simulation (S) de l'installation (10) comporte une matrice (A) de paramètres caractéristiques ($a_{i,j}$) qui est transformée pour en déduire une matrice (C) de paramètres caractéristiques du modèle de validation de données (D).

4. Procédé selon la revendication 3, **caractérisé par le fait que**, pour la transformation, des colonnes de la matrice (A) du modèle de simulation (S) sont disposées de telle sorte que toutes les colonnes associées aux valeurs mesurées (y) sont placées sur le côté droit de la matrice (A) dans une seconde zone et toutes les autres colonnes sont placées sur le côté gauche de la matrice (A) dans une première zone.

5. Procédé selon la revendication 4, **caractérisé par le fait que**, pour la transformation, dans une deuxième étape, les colonnes de la première zone sont mises le plus possible suivant une forme diagonale.

6. Procédé selon la revendication 5, **caractérisé par le fait que**, pour la transformation, dans une troisième étape, des lignes de la matrice (A) qui n'ont que des paramètres avec la valeur nulle dans la première zone sont déterminées et les équations correspondant à ces lignes sont utilisées comme modèle de validation de données (D).

7. Procédé selon la revendication 6, **caractérisé par le fait que** seuls les paramètres de la seconde zone des lignes déterminées et les conditions aux limites associées (q) ainsi que les valeurs mesurées (y) sont utilisés comme modèle de validation de données (D).

# FIG 1

**FIG 2** S: $A \circ x = b$

**FIG 3**
```
. . . * . * . . . . .
* * * . * . * . . . *
. . . . . * . . * . .
* . * . . . * * . * * *
```

**FIG 4**
```
. * * . .   | . . . . . .
* . . * .   | * * * . . *
. . * . *   | . . . . . .
* . . * .   | . * . * * *
```

**FIG 5**
```
* . . * .   | * * * . . *
. * . . *   | . . . . . .
. . * . *   | . . . . . .
. . . . .   | * * * * * *
```

**FIG 6**
```
* * * * * *
```

**FIG 7** D: $C \circ y = q$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1058169 A

**In der Beschreibung aufgeführte Nicht-Patentliteratur**

- Taschenbuch der Mathematik. Verlag Harri Deutsch